# EUROPEAN PATENT SPECIFICATION

(11) **EP 2 333 378 B1**
(45) Date of publication and mention of the grant of the patent: **13.03.2013**
(21) Application number: 10252097.0
(22) Date of filing: 10.12.2010
(51) Int. Cl.: F16H 25/24, F16J 3/04

(54) **Torque reacting bellows seal for linear actuator**
Drehmomentreaktionsbalgdichtung für ein Linearstellglied
Soufflet d'étanchéité à réaction de couple pour actionneur linéaire

(30) Priority: 14.12.2009 US 637296
(43) Date of publication of application: 15.06.2011
(73) Proprietor: Hamilton Sundstrand Corporation, Windsor Locks, CT 06096-1010 (US)
(72) Inventor: Himmelmann, Richard A., Beloit, WI 53511 (US)
(74) Representative: Tomlinson, Kerry John

(56) References cited:
- FR-A1- 2 856 452
- US-A- 4 923 432
- US-A1- 2006 118 365

## Description

### BACKGROUND OF THE INVENTION

The subject matter disclosed herein generally relates to actuators. More particularly, the subject matter disclosed herein relates to torque-reacting apparatus for linear actuators.

Linear actuators, particularly ball-screw actuators, convert rotary motion to linear motion via a helical track interface between a rotating component and a non-rotating component. A plurality of ball bearings are typically disposed in the helical track between the rotating component (often a nut) and the non-rotating component (often a screw). When a torque is applied to the nut and the nut rotates while the screw is prevented from rotating, the ball bearings are forced along the helical track thus forcing the screw in a linear direction.

To prevent the screw from rotating, the torque applied to the nut must be reacted somehow. One way to react the nut torque is to utilize the structure associated with the actuation load. Ball screw actuators are often installed in locations were the object being moved articulates on a structure that has a predetermined path. This structure is typically strong enough to inhibit rotation of the screw. In other applications, however, the torque cannot be reacted through the parent structure, so it must be reacted in other ways. One solution adds a linkage to the actuator connected to the screw to react the torque. In other cases, where, for example, packaging constraints bar the usage of linkage, torque-reacting pins or splines are utilized. The pins and splines utilize a sliding interface to accommodate the linear action of the actuator while reacting the applied torque. The sliding friction associated with the sliding interface absorbs energy from the system thereby reducing the overall efficiency of the actuator. Further, the sliding interface is often associated with high degrees of wear.

Most linear actuators rely on a dynamic seal, such as a lip seal to keep the environment out of the interior of the actuator. Most, if not all, dynamic seals offer some level of leakage which increases wear and decreases efficiency of the actuator. Additionally, in actuators intended for use in a vacuum, for example, space, a hermetic seal is necessary to prevent lubricant from escaping from the actuator.

FR 2856 452 A discloses a torque reactor in accordance with the preamble of claim 1.

### BRIEF DESCRIPTION OF THE INVENTION

Viewed from a first aspect, the present invention provides a torque reactor for a linear actuator comprising: a bellows seal arranged to be secured to a housing of a linear actuator; and a non-rotating element arranged to be disposed in the housing to react a torque applied to a rotating element operably connected to the non-rotating element and allow linear translation of the non-rotating element along an axis of rotation of the rotating element, wherein the bellows seal comprises a plurality of convolutions constructed of individual convolutions joined to adjacent convolutions at an outer diameter of each of the convolutions.

Viewed from a second aspect, the present invention provides a method of operating a linear actuator comprising: applying a torque to a rotating element of the linear actuator disposed in a housing at an axis of rotation, the rotating element operably connected to a non-rotating element; rotating the rotating element about the axis of rotation as a result of the torque application; reacting the torque through a bellows seal secured to the nonrotating element and the housing, wherein the bellows seal comprises a plurality of convolutions constructed of individual convolutions joined to adjacent convolutions at an outer diameter of each of the convolutions; and translating the nonrotating element linearly along the axis of rotation as a result of the rotation of the rotating element.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:

FIG. 1 is a cross-sectional view of an embodiment of a linear actuator; and

FIG. 2 is a partial cross-sectional view of an embodiment of a linear actuator.

The detailed description explains embodiments of the invention, together with advantages and features, by way of example with reference to the drawings.

### DETAILED DESCRIPTION OF THE INVENTION

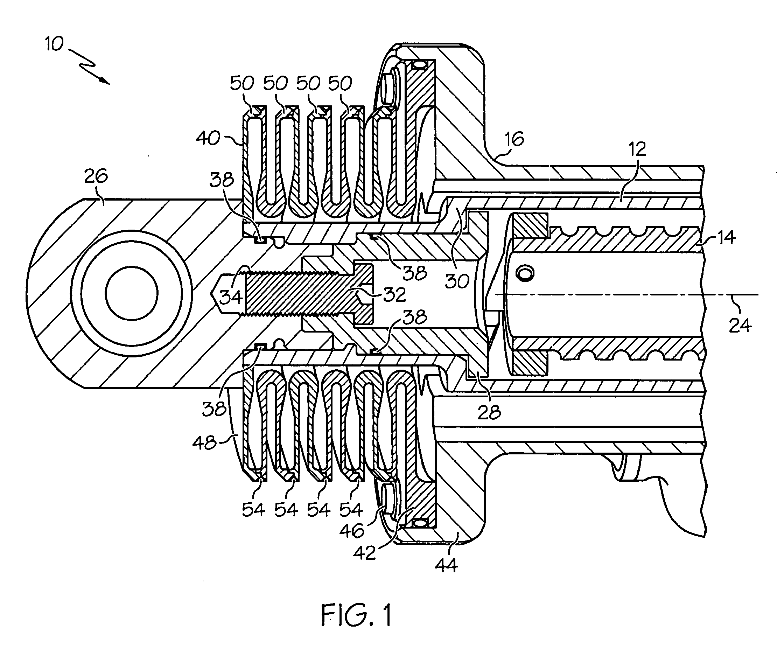

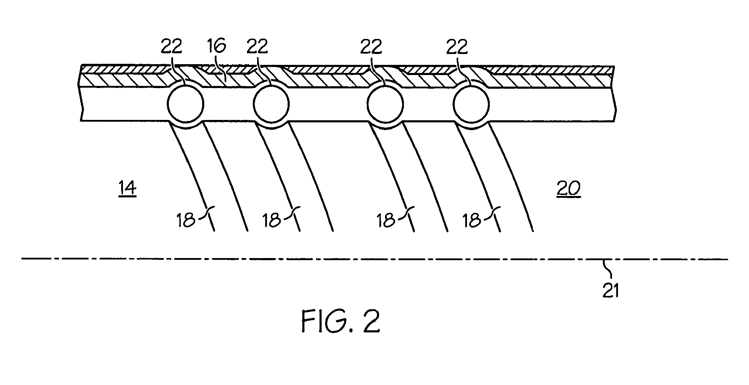

Shown in FIG. 1 is a cross-sectional view of an embodiment on a linear actuator 10. The actuator 10 includes a nut 12 and a screw 14 disposed in an actuator housing 16. The screw 14 is located radially inboard of the nut 12 and, as shown in FIG. 2, includes a helical channel 18 at an outer surface 20 of the screw 14. The nut 12 substantially surrounds the screw 14 and includes a plurality of ball bearings 22 secured in the nut 12 and which are located in the helical channel 18. When the screw 14 is rotated about a screw axis 24, ball bearings 22 follow the helical channel 18, forcing the nut 12 to translate linearly along the screw axis 24 relative to the screw 14.While in the embodiment shown, the screw 14 is rotated to translate the nut 12 linearly, it is to be appreciated that other embodiments may include a rotating nut 12 which translates the screw 14 linearly along the screw axis 24.

Referring again to FIG. 1, the nut 12 includes an end effector, for example, an eyelet 26 which transfers the linear motion of the nut 12 to an attached structure (not shown). In some embodiments, the nut 12 includes a bushing 28 pressed into an end 30 of the nut 12. The eyelet 26 is inserted into the end 30 of the nut 12 and a threaded fastener 32 is inserted through the bushing 28 and threaded into an eyelet thread 34 of the eyelet 26 to secure the eyelet 26 to the nut 12. While the embodiment of FIG. 1 shows a threaded fastener attachment of the eyelet 26 to the nut 12, other attachment means, for example, welding, are contemplated within the scope of the present disclosure. In some embodiments, to seal an interior of the nut 12 and prevent the nut 12 / screw 14 interface from being contaminated, one or more o-ring seals 36 are disposed between an eyelet shaft 38 and the nut 12. In the embodiment of FIG. 1, two o-ring seals 36 are shown between the eyelet shaft 38 and the nut 12, but other quantities of o-ring seals 36, for example, one or three o-ring seals 36 may be utilized depending on operating conditions of the actuator 10.

To react torque applied to the screw 14 during operation of the actuator 10 and to further prevent contamination of the actuator 10, a torque reacting bellows seal 40 is provided as shown in FIG. 1. The bellows seal 40 extends circumferentially around the nut 12 at a portion of the nut 12 extending outwardly from the housing 16. The bellows seal 40 is secured at a first end 42 to a seal attachment flange 44 of the housing 16. This attachment may be via a plurality of threaded fasteners 46 (as shown), or other means. Similarly, a second end 48 of the bellows seal 40 is secured to the nut 12, for example, to the eyelet 26 as shown. The second end 48 is secured to the eyelet by, for example, a plurality of threaded fasteners 46, welding, or by other suitable means.

Between the first end 42 and the second end 48, the bellows seal 40 comprises a plurality of convolutions 50. The plurality of convolutions 50 are constructed of individual convolutions 50 joined together by, for example, welding. Further, the cross-section of each convolution 50 may vary, such that an innermost portion, disposed at an inner diameter 52 of the convolution 50 has a greater material thickness than an outermost portion disposed at an outer diameter 54 of the convolution 50. The bellows seal 40 having the plurality of convolutions 50 is configured to have sufficient flexibility along the screw axis 24 direction to allow the nut 12 to move throughout its required stroke without overstressing and fatiguing the bellows seal 40. Further, the bellows seal 40 is configured to provide sufficient torsional rigidity to react the torque applied to the screw 14, thus eliminating the need for additional torque reacting components such as the linkage and/or spline of the prior art. In addition to providing torque reaction, the bellows seal 40 also serves to further prevent contamination of the actuator 10 to allow for operation of the actuator 10 in environments containing a wide range of contaminants. Further, use of a bellows seal 40 allows the actuator 10 to be hermetically sealed. In applications where the actuator 10 needs to operate in a vacuum (such as in space), a hermetically sealed actuator 10 retains its lubricant, even while operating in a vacuum.

While the invention has been described in detail in connection with only a limited number of embodiments, it should be readily understood that the invention is only limited by the scope of the appended claims.

## Claims

1. A torque reactor for a linear actuator (10) comprising:
a bellows seal (40) arranged to be secured to a housing (16) of a linear actuator (10); and
a nonrotating element (12) arranged to be disposed in the housing (16) to react a torque applied to a rotating element (14) operably connected to the nonrotating element (12) and allow linear translation of the nonrotating element (12) along an axis of rotation (24) of the rotating element (14),
**characterized in that** the bellows seal (40) comprises a plurality of convolutions (50) constructed of individual convolutions (50) joined to adjacent convolutions at an outer diameter (54) of each of the convolutions (50).

2. The torque reactor of Claim 1 wherein the bellows seal (40) extends substantially circumferentially around the nonrotating element (12).

3. The torque reactor of Claim 1 or 2 wherein a thickness of each convolution (50) of the plurality of convolutions (50) varies with radial distance from the axis of rotation (24).

4. The torque reactor of Claim 1, 2 or 3 wherein the bellows seal (40) is configured and secured to prevent introduction of contaminants into an interior of the linear actuator (10).

5. A linear actuator (10) comprising:
a housing (16);
a rotating element (14) disposed in the housing (16);
a nonrotating (12) element disposed in the housing (16) in operable communication with the rotating element (14); and
a torque reactor as in any preceding claim.

6. The linear actuator (10) of Claim 5 wherein the bellows seal (40) is secured to an attachment flange (44) of the housing (16) via a plurality of threaded fasteners (46).

7. The linear actuator (10) of Claim 5 or 6 wherein the rotating element (14) is a screw comprising at least one helical channel (18).

8. The linear actuator (10) of Claim 7 wherein the nonrotating element (12) includes at least one ball bearing (22) receivable in the at least one helical channel (18).

9. The linear actuator (10) of any of Claims 5 to 8 comprising at least one O-ring seal (38) disposed at the nonrotating element (12) to prevent contamination of an interior of the linear actuator (10).

10. A method of operating a linear actuator (10) comprising:
applying a torque to a rotating element (14) of the linear actuator (10) disposed in a housing (16) at an axis of rotation (24), the rotating element (14) operably connected to a nonrotating element (12);
rotating the rotating element (14) about the axis of rotation (24) as a result of the torque application;
reacting the torque through a bellows seal (40) secured to the nonrotating element (12) and the housing (16), wherein the bellows seal (40) comprises a plurality of convolutions (50) constructed of individual convolutions (50) joined to adjacent convolutions at an outer diameter (54) of each of the convolutions (50); and
translating the nonrotating element (12) linearly along the axis of rotation (24) as a result of the rotation of the rotating element (14).

11. The method of Claim 10 wherein rotation of the rotating element (14) is translated to linear motion of the nonrotating element (12) via at least one helical channel (18) disposed in the rotating element (14).

12. The method of Claim 10 or 11 wherein nonrotating element (12) includes at least one ball bearing (22) receivable in the at least one helical channel (18) to transfer the torque to the nonrotating element (12).

13. The method of Claim 10, 11 or 12 comprising preventing introduction of contaminants into an interior of the linear actuator (10) via the location and configuration of the bellows seal (40).

## Patentansprüche

1. Drehmomentstütze für einen Linearaktuator (10) aufweisend:
eine Faltenbalgdichtung (40), die eingerichtet ist, an einem Gehäuse (16) eines Linearaktuators (10) befestigt zu werden; und
ein drehungsfreies Element (12), welches zur Anordnung in dem Gehäuse (16) eingerichtet ist, um einem Drehmoment entgegenzuwirken, welches auf ein drehendes Element (14), welches betriebsmäßig mit dem drehungsfreien Element (12) verbunden ist, angelegt wird, und eine Linearverschiebung des drehungsfreien Elements (12) entlang einer Drehachse (24) des drehenden Elements (14) zu ermöglichen,
**dadurch gekennzeichnet, dass** die Faltenbalgdichtung (40) eine Vielzahl von Falten (50) aufweist, die aus einzelnen Falten (50) aufgebaut sind, welche mit benachbarten Falten bei einem Außendurchmesser (54) einer jeden der Falten (50) verbunden sind.

2. Drehmomentstütze gemäß Anspruch 1, wobei die Faltenbalgdichtung (40) sich im Wesentlichen umfangsmäßig um das drehungsfreie Element (12) erstreckt.

3. Drehmomentstütze gemäß Anspruch 1 oder 2, wobei eine Stärke jeder Falte (50) der Vielzahl von Falten (50) sich mit radialem Abstand von der Drehachse (24) ändert.

4. Drehmomentstütze gemäß Anspruch 1, 2 oder 3, wobei die Faltenbalgdichtung (40) konfiguriert und befestigt ist, um Eintritt von Fremdstoffen in ein Inneres des Linearaktuators (10) zu verhindern.

5. Linearaktuator (10) aufweisend:
ein Gehäuse (16);
ein drehendes Element (14), welches in dem Gehäuse (16) angeordnet ist;
ein drehungsfreies Element (12), welches in dem Gehäuse (16) in einer betriebsmäßigen Kommunikation mit dem drehenden Element (14) angeordnet ist; und
eine Drehmomentstütze gemäß einem vorhergehenden Anspruch.

6. Linearaktuator (10) gemäß Anspruch 5, wobei die Faltenbalgdichtung (40) an einem Befestigungsflansch (44) des Gehäuses (16) über eine Vielzahl von Befestigungselementen (46) mit Gewinde befestigt ist.

7. Linearaktuator (10) gemäß Anspruch 5 oder 6, wobei das rotierende Element (14) eine Schraube ist, die wenigstens einen schraubenförmigen Kanal (18) aufweist.

8. Linearaktuator (10) gemäß Anspruch 7, wobei das drehungsfreie Element (12) wenigstens ein Kugellager (22) aufweist, welches in dem wenigstens einen spiralförmigen Kanal (18) aufnehmbar ist.

9. Linearaktuator (10) gemäß einem der Ansprüche 5 bis 8, aufweisend wenigstens eine O-Ring-Dichtung (38), die an dem nicht rotierenden Element (12) angeordnet ist, um Verunreinigung eines Inneren des Aktuators (10) zu verhindern.

10. Betriebsverfahren eines Linearaktuators (10) aufweisend:
Beaufschlagen eines drehenden Elements (14) des Linearaktuators (10) mit einem Drehmoment, der in einem Gehäuse (16) an einer Drehachse (24) angeordnet ist, wobei das drehende Element (14) betriebsmäßig mit einem drehungsfreien Element (12) verbunden ist;
Drehen des drehenden Elements (14) um die Drehachse (24) als Folge der Drehmomentbeaufschlagung;
Entgegenwirken dem Drehmoment durch eine Faltenbalgdichtung (40), die an dem drehungsfreien Element (12) und dem Gehäuse (16) befestigt ist, wobei die Faltenbalgdichtung (40) eine Vielzahl von Falten (50) aufweist, die aus einzelnen Falten (50) aufgebaut sind, welche mit benachbarten Falten an einem Außendurchmesser (54) einer jeder der Falten (50) verbunden sind; und
Verschieben des nicht rotierenden Elements (12) linear entlang der Drehachse (24) als Folge der Drehung des drehenden Elements (14).

11. Verfahren gemäß Anspruch 10, wobei Drehen des drehenden Elements (14) in eine lineare Bewegung des drehungsfreien Elements (12) über wenigstens einen schraubenförmigen Kanal (18), der in dem drehenden Element (14) angeordnet ist, übersetzt wird.

12. Verfahren gemäß Anspruch 10 oder 11, wobei das drehungsfreie Element (12) wenigstens ein Kugellager (22) aufweist, welches in dem wenigstens einen schraubenförmigen Kanal (18) aufnehmbar ist, um das Drehmoment auf das drehungsfreie Element (12) zu übertragen.

13. Verfahren gemäß Anspruch 10, 11 oder 12, aufweisend Verhindern von Eintrag von Fremdmaterial in ein Inneres des Linearaktuators (10) über den Ort und die Konfiguration der Faltenbalgdichtung (40).

## Revendications

1. Dispositif de réaction de couple pour un actionneur linéaire (10), comprenant :
un soufflet d'étanchéité (40) aménagé pour être fixé à un boîtier (16) d'un actionneur linéaire (10); et
un élément non rotatif (12) aménagé pour être disposé dans le boîtier (16) afin de réagir à un couple appliqué à un élément rotatif (14) raccordé en service à l'élément non rotatif (12) et permettre une translation linéaire de l'élément non rotatif (12) le long d'un axe de rotation (24) de l'élément rotatif (14),
**caractérisé en ce que** le soufflet d'étanchéité (40) comprend une pluralité de convolutions (50) constituées de convolutions individuelles (50) jointes à des convolutions adjacentes sur un diamètre externe (54) de chacune des convolutions (50).

2. Dispositif de réaction de couple selon la revendication 1, dans lequel le soufflet d'étanchéité (40) s'étend sensiblement sur la circonférence autour de l'élément non rotatif (12).

3. Dispositif de réaction de couple selon la revendication 1 ou la revendication 2, dans lequel l'épaisseur de chaque convolution (50) de la pluralité de convolutions (50) varie avec la distance radiale à l'axe de rotation (24).

4. Dispositif de réaction de couple selon la revendication 1, 2 ou 3, dans lequel le soufflet d'étanchéité (40) est configuré et fixé pour empêcher l'introduction de contaminants à l'intérieur de l'actionneur linéaire (10).

5. Actionneur linéaire (10), comprenant :
un boîtier (16) ;
un élément rotatif (14) disposé dans le boîtier (16) ;
un élément non rotatif (12) disposé dans le boîtier (16) en communication de service avec l'élément rotatif (14) ; et
un dispositif de réaction de couple selon l'une quelconque des revendications précédentes.

6. Actionneur linéaire (10) selon la revendication 5, dans lequel le soufflet d'étanchéité (40) est fixé à une bride de fixation (44) du boîtier (16) via une pluralité d'attaches filetées (46).

7. Actionneur linéaire (10) selon la revendication 5 ou la revendication 6, dans lequel l'élément rotatif (14) est une vis comprenant au moins un canal hélicoïdal (18).

8. Actionneur linéaire (10) selon la revendication 7, dans lequel l'élément non rotatif (12) comprend au moins un roulement à billes (22) qui peut être reçu dans l'au moins un canal hélicoïdal (18).

9. Actionneur linéaire (10) selon l'une quelconque des revendications 5 à 8, comprenant au moins un joint torique (38) disposé sur l'élément non rotatif (12) pour empêcher la contamination de l'intérieur de l'actionneur linéaire (10).

10. Procédé de fonctionnement d'un actionneur linéaire (10), comprenant les étapes consistant à :
appliquer un couple à un élément rotatif (14) de l'actionneur linéaire (10) disposé dans un boîtier (16) sur un axe de rotation (24), l'élément rotatif (14) étant raccordé en service à un élément non rotatif (12) ;
faire tourner l'élément rotatif (14) autour de l'axe de rotation (24) à la suite de l'application du couple ;
faire réagir le couple via un soufflet d'étanchéité (40) fixé à l'élément non rotatif (12) et au boîtier (16), dans lequel le soufflet d'étanchéité (40) comprend une pluralité de convolutions (50) constituées de convolutions individuelles (50) jointes à des convolutions adjacentes sur un diamètre externe (54) de chacune des convolutions (50) ; et
appliquer un mouvement de translation à l'élément non rotatif (12) de manière linéaire le long de l'axe de rotation (24) à la suite de la rotation de l'élément rotatif (14).

11. Procédé selon la revendication 10, dans lequel la rotation de l'élément rotatif (14) est transformée en mouvement linéaire de l'élément non rotatif (12) via au moins un canal hélicoïdal (18) disposé dans l'élément rotatif (14).

12. Procédé selon la revendication 10 ou la revendication 11, dans lequel l'élément non rotatif (12) comprend au moins un roulement à billes (22) qui peut être reçu dans l'au moins un canal hélicoïdal (18) pour transférer le couple à l'élément non rotatif (12).

13. Procédé selon la revendication 10, 11 ou 12, comprenant l'étape visant à empêcher l'introduction de contaminants à l'intérieur de l'actionneur linéaire (10) par la localisation et la configuration du soufflet l'étanchéité (40).
